# EUROPÄISCHE PATENTSCHRIFT

(11) **EP 0 856 342 B1**
(45) Veröffentlichungstag und Bekanntmachung des Hinweises auf die Patenterteilung: **06.09.2000**
(21) Anmeldenummer: 97120420.1
(22) Anmeldetag: 21.11.1997
(51) Int. Cl.: A63H 17/26

(54) **Anhänger-Kupplung für Spiel-Fahrzeuge, insbesondere Traktorkupplung**
Trailer coupling for toy vehicles, especially tractors
Attache de remorque pour véhicules-jouets, en particulier tracteurs

(30) Priorität: 29.01.1997 DE 29701360 U
(43) Veröffentlichungstag der Anmeldung: 05.08.1998
(73) Patentinhaber: Bruder Spielwaren GmbH + Co. KG, 90768 Fürth (DE)
(72) Erfinder: Bruder, Paul Heinz, 90768 Fürth (DE)
(74) Vertreter: Hübner, Gerd, Dipl.-Phys.

(56) Entgegenhaltungen:
- DE-U- 29 608 600

## Beschreibung

Die Erfindung betrifft eine Anhänger-Kupplung für Spiel-Fahrzeuge, insbesondere eine Traktorkupplung.

Bei derartigen Anhänger-Kupplungen stellt sich grundsätzlich das Problem, daß der an einem Lagerteil des Zugfahrzeuges angeordnete Kupplungszapfen beim Spielen großen Belastungen ausgesetzt ist. Insbesondere bei einem heftigen Zerren am Anhänger, einem starken Verwinden des Gespannes oder vor allem bei einem Anheben des Gespannes am Traktor und folglich relativ dazu stark verkippenden Anhänger kann der Kupplungszapfen abbrechen, was das Spielgespann praktisch wertlos macht.

Aus der DE 296 08 600 U1 ist eine Anhänger-Kupplung für Spiel-Fahrzeuge bekannt, bei der der Kupplungszapfen einerseits besonders elastisch gelagert und andererseits von einem Stützkragen umgeben ist, auf dem sich das Deichselteil des Anhängers bei einem Verkippen des Anhängers gegenüber dem Zugfahrzeug abstützen und die Verbindung zwischen dem Einhängeauge am Deichselteil und dem Kupplungszapfen ausgehebelt werden kann.

Die in der vorgenannten Druckschrift gezeigte Anhänger-Kupplung erfüllt zwar grundsätzlich ihren Zweck, ist aufgrund des Stützkragens jedoch unter optischen Aspekten und einer möglichst naturgetreuen Nachbildung von Fahrzeugen verbesserungsbedürftig. Außerdem ist diese bekannte Anhänger-Kupplung für große Spielfahrzeuge aufgrund ihrer begrenzten Stabilität weniger geeignet.

Im übrigen wurde herausgefunden, daß gerade das Anheben des Gespannes am Zugfahrzeug und das entsprechende Wegkippen des oft mit Sand beladenen und dadurch schweren Anhängers nach hinten den häufigsten "Störfall" in der Praxis darstellt, so daß die Anhänger-Kupplung speziell zu dessen Beherrschung ausgelegt sein sollte.

Eine derartige Anhänger-Kupplung ist nun im Anspruch 1 angegeben. Demgemäß weist einerseits der Kupplungszapfen vor seinem freien Ende eine seitlich angeordnete Rastnase auf, die mit einer Gegenflanke am Fahrzeug zusammenwirkt. Zwischen der Gegenflanke und der Rastnase ist eine Einführungsöffnung gebildet, durch die beim Einhängen einer am Deichselteil des Anhängers angeordneten Langlochöffnung auf dem Kupplungszapfen ein die Langlochöffnung begrenzender Riegelschenkel am freien Ende des Deichselteils hindurchgeführt werden muß. Die Langlochöffnung mit ihrem Riegelschenkel ist so bemessen, daß letzterer in Horizontalstellung von Fahrzeug und Anhänger unter der Rastnase verrastet ist. Werden Fahrzeug und Anhänger in die geschilderte, zueinander verkippte Stellung verbracht, stützt sich das Deichselteil an einer Stützkante am Lagerteil ab, wobei sich durch das Verkippen der Riegelschenkel schräg stellt, und somit leichtgängig durch die Einführungsöffnung wieder aus dem Rasteingriff gelangen kann. Das Deichselteil ist also in der geschilderten verkippten Stellung mit einer gegenüber dem Rasteingriff verringerten Widerstand mit seiner Langlochöffnung vom Kupplungszapfen abziehbar. Die Leichtgängigkeit kann dabei soweit verbessert werden, daß ein praktisch selbsttätiges Lösen des Kupplungseingriffes zwischen Deichselteil und Kupplungszapfen von statten gehen kann.

Bevorzugte Ausführungsformen sowie weitere Merkmale, Einzelheiten und Vorteile der Erfindung sind den Unteransprüchen und der nachfolgenden Beschreibung entnehmbar, in der ein Ausführungsbeispiel des Erfindungsgegenstandes anhand der beigefügten Zeichnungen näher erläutert wird. Es zeigen:
- Fig. 1: eine schematische Seitenansicht eines Spielzeug-Traktors mit Anhänger,
- Fig. 2: Vertikal-Längsschnitte durch die Anhänger-Kupplung des in Fig. 1 gezeigten Gespanns,
- Fig. 3: eine Draufsicht auf den traktorseitigen Teil der Anhänger-Kupplung,
- Fig. 4: eine ausschnittsweise Draufsicht auf das hängerseitige Deichselteil der Anhänger-Kupplung und
- Fig. 5: einen Vertikal-Längsschnitt durch die Anhänger-Kupplung gemäß Fig. 2 bei zueinander verkippten Traktor und Anhänger.

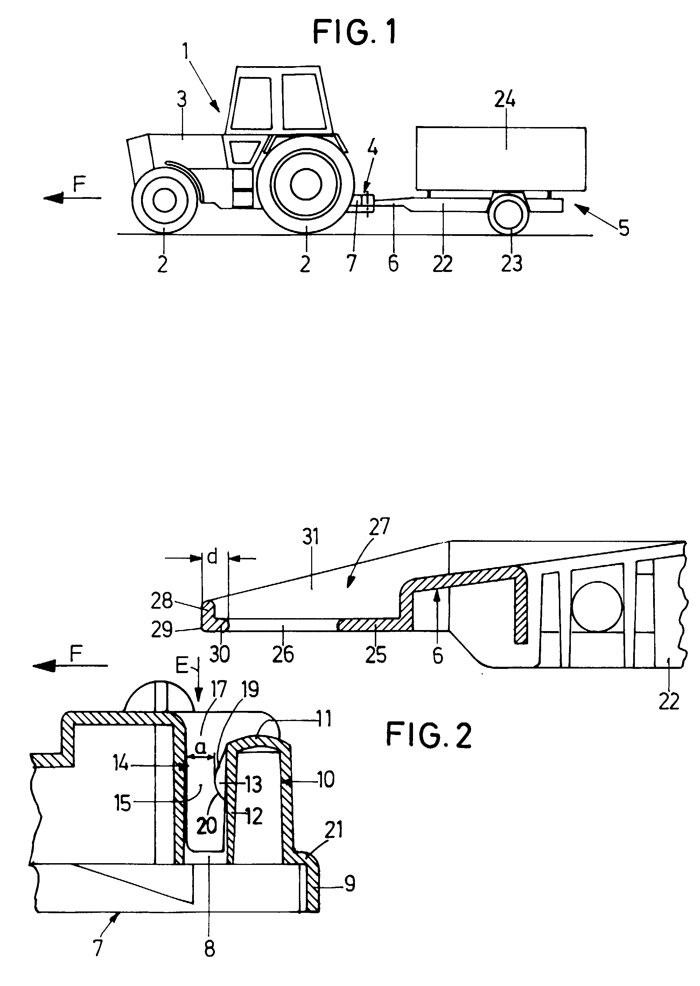

Wie Fig. 1 entnehmbar ist, weist ein Spielzeug-Traktor 1 Räder 2 und eine Karosserie 3 aus spritzgegossenem Kunststoff auf. Am rückwärtigen Ende der Karosserie 3 ist eine Anhänger-Kupplung 4 an die Karosserie 3 angeformt. Mittels der Anhänger-Kupplung 4 kann ein Anhänger 5 mit seinem Deichselteil 6 an den Spielzeug-Traktor 1 angehängt werden.

Der Aufbau und die Funktionsweise der Anhänger-Kupplung 4 ist den Fig. 2 bis 5 entnehmbar:

An einer fahrzeugseitigen Konsole 7 ist ein im wesentlichen plattenförmiges Lagerteil 8 angeformt, dessen Außenrand sind in eine nach unten weisende Schürze 9 fortsetzt. An das Lagerteil 8 ist einstückig ein nach oben abstehenden Kupplungszapfen 10 angeformt, der innen hohl und im wesentlichen zylindrisch ausgebildet ist. Vor dem freien Ende 11 des Kupplungszapfen 10, das leicht ballig ausgeformt ist, ist an der in Fahrtrichtung F weisenden Seite des Zapfenmantels 12 eine Rastnase 13 angespritzt. Der Kupplungszapfen ist den jeweiligen Stabilitätsanforderungen durch entsprechende Dimensionierung praktisch beliebig anpaßbar.

Die Rastnase 13 wirkt mit einer als Ganzes mit der Bezugszahl 14 gekennzeichneten Gegenflanke in noch näher zu erläuternder Weise zusammen. Rastnase 13 und Gegenflanke 14 bilden mit ihrem lichten Abstand a eine Einführungsöffnung 15 für das Deichselteil 6 des Anhängers 5. Aufbau und Funktion des Deichselteils 6 werden im folgenden ebenfalls noch näher erläutert.

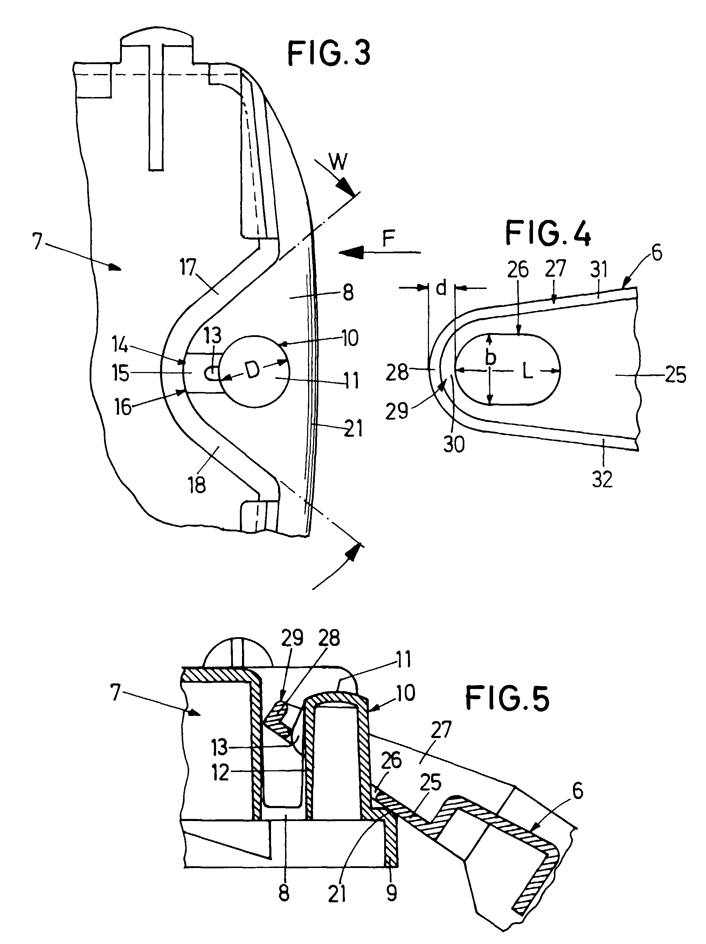

Wie aus Fig. 4 deutlich wird, weist die Gegenflanke 14 einen koaxial mit dem Kupplungszapfen 10 verlaufenden, teilzylindrischen Flankenbereich 16 auf, an den sich beiderseits zum Anhänger 5 hin trichterartig öffnende Seitenflanken 17, 18 anschließen. Der von den beiden Seitenflanken 17, 18 gebildete Öffnungswinkel W beträgt zirka 80°.

Wie aus Fig. 2 hervorgeht, weist die Rastnase 13 eine flache, entgegen der Einführungsrichtung E des Deichselteils 6 in die Einführungsöffnung 15 weisende Gleitschräge 19 und eine demgegenüber steilere, in Einführungsrichtung E weisende Rastschräge 20 auf. Letztere ist ballig ausgeformt.

Wie aus Fig. 2 und 3 ferner hervorgeht, bildet das rückwärtige Ende des Lagerteils 8 im Übergangsbereich zur Schürze 9 eine Stützkante 21, die in Draufsicht (Fig. 3) leicht konvex gewölbt verläuft.

Die seitlich außerhalb der Seitenflanken 17, 18 liegenden Bauteile der Konsole 7 spielen für die vorliegende Erfindung keine Rolle und bedürfen daher keiner näheren Erläuterung.

Das Deichselteil 6 des Anhängers 5 ist in Fig. 2 und 4 näher dargestellt. Es ist einstückig in Fahrtrichtung F weisend an den Rahmen 22 angeformt, der über eine entsprechende Achse die Räder 23 und den Laderaum 24 des Anhängers 5 trägt. In einem Plattenteil 25 ist eine mit ihrer Längserstreckung parallel zur Fahrtrichtung F ausgerichtete Langlochöffnung 26 eingeformt, mit der das Deichselteil 6 am Kupplungszapfen 10 in noch näher zu erläuternder Weise einhängbar ist. Das Plattenteil 25 ist von einer seitlich und am freien Ende umlaufenden, nach oben abstehenden Verstärkungswand 27 umgeben, die dem Deichselteil 6 die nötige Steifigkeit verleiht. Die Verstärkungswand 27 fällt in Fahrtrichtung F nach vorne in ihrer Höhe ab und bildet den Vertikalteil 28 eines sogenannten Riegelschenkels 29, der ihre Langlochöffnung 26 am freien Ende des Deichselteils 6 begrenzt. Der Horizontalteil 30 des Riegelschenkels 29 ist von dem entsprechenden Abschnitt des Plattenteils 25 gebildet. Der Vertikalteil 28 des Riegelschenkels 29 ist an der der Langlochöffnung 26 abgewandten Seite des Riegelschenkels 29 - also ganz vorne am Plattenteil 25 - angeordnet.

Wie in Fig. 2 angedeutet ist, entspricht die horizontale Dicke d des Horizontalteils 30 des Riegelschenkels 29 etwa dem 1,1- bis 1,2-fachen des lichten Abstandes a der Einführungsöffnung 15 zwischen Rastnase 13 und Gegenflanke 14. Die Breite b der Langlochöffnung 26 ist geringfügig größer als der Durchmesser D des Kupplungszapfens 10, wogegen die Länge L der Langlochöffnung 26 etwa dem 1,5-fachen dieses Durchmessers entspricht.

Aufgrund der vorstehenden Bemessungsregeln wird beim Einhängen der Langlochöffnung 26 auf dem Kupplungszapfen 10 der Riegelschenkel 29 unter einer elastischen Deformation des Kupplungszapfens 10 mit seiner Rastnase 13 unter dieser verrastet, was durch die Gleitschräge 19 erleichtert wird. Wie im normalen Spielbetrieb, wenn also das Gespann aus Spielzeug-Traktor 1 und Anhänger 5 in der in Fig. 1 gezeigten Stellung bewegt wird, sichert die Rastnase 13 das Deichselteil 6 auf dem Kupplungszapfen 10, was durch die ballige Rastschräge 20 unterstützt wird. Im übrigen bilden dabei die beiden Seitenflanken 17, 18 einen Anschlag für die beiden seitlichen Flanken 31 bzw. 32 der Verstärkungswand 27, so daß der Einlenkwinkel zwischen den beiden Gespannteilen begrenzt wird.

In Fig. 5 ist nun explizit der eingangs erwähnte unsachgemäße Gebrauch des Gespanns und der dabei zum Tragen kommende Lösemechanismus für die Anhänger-Kupplung 4 dargestellt. Wird z. B. der Spielzeug-Traktor 1 angehoben, so kippt der Anhänger 5 nach hinten weg und sein Deichselteil 6 nimmt die in Fig. 5 dargestellte geneigte Position ein. Dabei stützt sich das Plattenteil 25 des Deichselteils 6 auf der Stützkante 21 der Konsole 7 ab, so daß das Deichselteil 6 definiert verschwenkt wird. Gleichzeitig verringert sich durch diese Verschwenkung die wirksame Dicke d des Riegelschenkels 29 am Vorderende der Langlochöffnung 26, so daß der Riegelschenkel 29 leichtgängig durch die Einführungsöffnung 15 wieder nach außen treten kann. Ein Hängenbleiben und damit eine Deformation und möglicher Bruch des Kupplungszapfens 10 werden damit wirkungsvoll vermieden.

## Patentansprüche

1. Anhänger-Kupplung für Spiel-Fahrzeuge, insbesondere Traktorkupplung, mit
- einem Lagerteil (8) am Fahrzeug,
- einem am Lagerteil (8) angeordneten, nach oben stehenden Kupplungszapfen (10),
- einer vor dem freien Ende des Kupplungszapfens (10) seitlich angeordneten Rastnase (13),
- einer mit der Rastnase (13) des Kupplungszapfens (10) zusammenwirkenden Gegenflanke (14) am Fahrzeug (1), zwischen der und der Rastnase (13) eine Einführungsöffnung (15) gebildet ist,
- einem Deichselteil (6) am Anhänger (5),
- einer am Deichselteil (6) angeordneten Langlochöffnung (26), mit der das Deichselteil (6) am Kupplungszapfen (10) einhängbar ist, wobei ein die Langlochöffnung (26) am freien Ende des Deichselteils (6) begrenzender Riegelschenkel (29) so bemessen ist, daß er in Horizontalstellung von Fahrzeug (1) und Anhänger (5) unter der Rastnase (13) verrastbar ist und daß das Deichselteil (6) in einer zueinander verkippten Stellung von Fahrzeug (1) und Anhänger (5) unter Abstützung des Deichselteils (6) an einer Stützkante (21) am Lagerteil (8) mit gegenüber dem Rasteingriff verringertem Widerstand mit seiner Langlochöffnung (26) vom Kupplungszapfen (10) abziehbar ist.

2. Anhänger-Kupplung nach Anspruch 1, **dadurch gekennzeichnet, daß** der Riegelschenkel (29) im Querschnitt L-förmig ausgestaltet ist, wobei sein Vertikalteil (28) an der der Langlochöffnung (26) abgewandten Seite des Riegelschenkels (29) angeordnet ist.

3. Anhänger-Kupplung nach Anspruch 1 oder 2, **dadurch gekennzeichnet, daß** der Riegelschenkel(29), insbesondere sein L-Horizontalteil (30), in seiner horizontalen Dicke (d) etwa dem 1,1- bis 1,2-fachen des lichten Abstandes (a) der Einführungsöffnung (15) zwischen Rastnase (13) und Gegenflanke (14) entspricht.

4. Anhänger-Kupplung nach einem der Ansprüche 1 bis 3, **dadurch gekennzeichnet, daß** die Gegenflanke (14) einen koaxial mit dem Kupplungszapfen (10) verlaufenden, teilzylindrischen Flankenbereich (16) mit sich seitlich daran anschließenden, zum Anhänger (5) hin trichterartig öffnenden Seitenflanken (17, 18) aufweist.

5. Anhänger-Kupplung nach Anspruch 5, **dadurch gekennzeichnet, daß** das der Öffnungswinkel (w) der Seitenflanken (17, 18) zwischen 70° und 90° beträgt.

6. Anhänger-Kupplung nach einem der Ansprüche 1 bis 5, **dadurch gekennzeichnet, daß** die Stützkante (21) auf der dem Anhänger (5) zugewandten Seite des Kupplungszapfens (10) an das Lagerteil (8) angeformt ist, wobei die Stützkante (21) in Draufsicht konvex gewölbt ist.

7. Anhänger-Kupplung nach einem der Ansprüche 1 bis 6, **dadurch gekennzeichnet, daß** die Länge (L) der Langlochöffnung (26) etwa dem 1,5-fachen des Durchmessers (D) des Kupplungszapfens (10) entspricht.

8. Anhänger-Kupplung nach einem der Ansprüche 1 bis 7, **dadurch gekennzeichnet, daß** die Rastnase (13) eine flache, entgegen der Einführungsrichtung (E) des Riegelschenkels (29) weisende Gleitschräge (19) und eine demgegenüber steilere, in Einführungsrichtung (E) weisende Rastschräge (20) aufweist.

9. Anhänger-Kupplung nach Anspruch 8, **dadurch gekennzeichnet, daß** die Rastschräge (20) ballig ausgeformt ist.

## Claims

1. Trailer coupling for toy vehicles, in particular tractor coupling, comprising
- a bearing member (8) on the vehicle;
- a coupling pin (10) disposed on the bearing member (8) and projecting upwards;
- a locking projection (13) disposed laterally before the free end of the coupling pin (10);
- a mating flank (14) on the vehicle (1), which cooperates with the locking projection (13) of the coupling pin (10) and between which and the locking projection (13) is formed an inlet (15);
- a drawbar (6) on the trailer (5);
- an oblong hole (26), which is disposed on the drawbar (6) and by means of which the drawbar (6) can be hooked on the coupling pin (10), a locking leg (29), which defines the oblong hole (26) at the free end of the drawbar (6), being dimensioned such that it can be locked in place underneath the locking projection (13) when the vehicle (1) and the trailer (5) are in a horizontal position, and that, in a tilted position of the vehicle (1) and the trailer (5) relative to each other, the drawbar (6) can be pulled off the coupling pin (10) by its oblong hole (26) at a resistance which is reduced as compared to the locking engagement, while the drawbar (6) supports itself on a supporting edge (21) disposed on the bearing member (8).

2. Trailer coupling according to claim 1, **characterized in that** the locking leg (29) has a cross section in the shape of an L, its vertical member (28) being disposed on the side of the locking leg (29) that is turned away from the oblong hole (26).

3. Trailer coupling according to claim 1 or 2, **characterized in that** the locking leg (29), in particular the horizontal member (30) of the L-shape thereof, corresponds by horizontal thickness (d) to approximately 1.1 to 1.2 times the clearance (a) of the inlet (15) between the locking projection (13) and the mating flank (14).

4. Trailer coupling according to one of claims 1 to 3, **characterized in that** the mating flank (14) comprises a partially cylindrical flank portion (16) which extends coaxially of the coupling pin (10) and which has laterally adjoining side flanks (17, 18) that open in the way of a hopper toward the trailer (5).

5. Trailer coupling according to claim 5, **characterized in that** the aperture angle (w) of the side flanks (17, 18) ranges between 70° and 90°.

6. Trailer coupling according to one of claims 1 to 5, **characterized in that** the supporting edge (21) on the side of the coupling pin (10) turned to the trailer (5) is moulded on the on the bearing member (8), the supporting edge (21) being convex in a plan view.

7. Trailer coupling according to one of claims 1 to 6, **characterized in that** the length (L) of the oblong hole (26) corresponds to approximately 1.5 times the diameter (D) of the coupling pin (10).

8. Trailer coupling according to one of claims 1 to 7, **characterized in that** the locking projection (13) comprises a flat sliding slope (19) counter to the direction of insertion (E) of the locking leg (29) and, in the direction of insertion (E) thereof, a locking slope (20) ascending more steeply as compared to the sliding slope (19).

9. Trailer coupling according to claim 8, **characterized in that** the locking slope (20) is crowned.

## Revendications

1. Attelage de remorque pour véhicule-jouet, en particulier attelage de tracteur, comprenant :
- une partie de montage (8) sur le véhicule,
- un tenon d'attelage (10) agencé sur la partie de montage (8) et dressé vers le haut,
- un bec d'enclenchement (13) agencé latéralement devant l'extrémité libre du tenon d'attelage (10),
- un flanc complémentaire (14) sur le véhicule (1), qui coopère avec le bec d'enclenchement (13) du tenon d'attelage (10), en formant une ouverture d'introduction (15) entre ledit flanc complémentaire (14) et le bec d'enclenchement (13),
- une partie formant timon (6) sur la remorque (5),
- une ouverture oblongue (26) ménagée dans la partie formant timon (6), au moyen de laquelle ladite partie formant timon (6) est susceptible d'être accrochée sur le tenon d'attelage (10), avec un bras de verrou (29) qui délimite l'ouverture oblongue (26) à l'extrémité libre de la partie formant timon (6) et dont les dimensions sont ainsi choisies qu'il est susceptible d'être enclenché en position horizontale du véhicule (1) et de la remorque (5) au-dessous du bec d'enclenchement (13), et que la partie formant timon (6) et susceptible d'être enlevée avec son ouverture oblongue (26) depuis le tenon d'attelage (10) dans une position dans laquelle le véhicule (1) et la remorque (5) sont basculés l'un par rapport à l'autre tandis que la partie formant timon (6) s'appuie sur une arête de soutien (21) sur la partie de montage (8) avec une résistance réduite par rapport à l'engagement d'enclenchement.

2. Attelage de remorque selon la revendication 1, caractérisé en ce que le bras de verrou (29) est réalisé avec une section en forme de L, dont la partie verticale (29) est agencée du côté du bras de verrou (29) détourné de l'ouverture oblongue (26).

3. Attelage de remorque selon l'une ou l'autre des revendications 1 et 2, caractérisé en ce que le bras de verrou (29), en particulier la partie horizontale (30) de sa forme en L, présente une épaisseur horizontale (d) qui correspond approximativement entre 1,1 à 1,2 fois la distance libre (a) de l'ouverture d'introduction (15) entre le bec d'enclenchement (13) et le flanc complémentaire (14).

4. Attelage de remorque selon l'une des revendications 1 à 3, caractérisé en ce que le flanc complémentaire (14) comprend une région de flanc (16) partiellement cylindrique et s'étendant coaxialement avec le tenon de l'attelage (10), avec des flancs latéraux (17, 18) qui se raccordent latéralement à cette région de flanc et qui s'ouvrent en forme d'entonnoir en direction de la remorque (5).

5. Attelage de remorque selon la revendication 4, caractérisé en ce que l'angle d'ouverture (w) des flancs latéraux (17, 18) est compris entre 70° et 90°.

6. Attelage de remorque selon l'une des revendications 1 à 5, caractérisé en ce que l'arête de soutien (21) est conformée sur la partie de montage (8) et du côté du tenon d'attelage (10) tourné vers la remorque (5), et en ce que ladite arête de soutien (21) est bombée sous forme convexe en vue de dessus.

7. Attelage de remorque selon l'une des revendications 1 à 6, caractérisé en ce que la longueur (L) de l'ouverture oblongue (26) correspond approximativement à 1,5 fois le diamètre (D) du tenon attelage (10).

8. Attelage de remorque selon l'une des revendications 1 à 7, caractérisé en ce que le bec d'enclenchement (13) comprend une face oblique de coulissement (19) plate et tournée à l'opposé de la direction d'introduction (E) du bras de verrou (29), et une face oblique d'enclenchement (20) avec une inclinaison plus raide que celle-ci et tournée dans la direction d'introduction (E).

9. Attelage de remorque selon la revendication 8, caractérisé en ce que la face oblique d'enclenchement (20) est formée de manière bombée.
